(19) Europäisches Patentamt / European Patent Office / Office européen des brevets

(11) **EP 3 173 459 B1**

(12) **FASCICULE DE BREVET EUROPEEN**

(45) Date de publication et mention
de la délivrance du brevet:
**11.03.2020 Bulletin 2020/11**

(51) Int Cl.:
*C10B 47/04* (2006.01)     *C10B 47/24* (2006.01)
*C10B 49/10* (2006.01)     *C10B 53/02* (2006.01)

(21) Numéro de dépôt: **16200502.9**

(22) Date de dépôt: **24.11.2016**

(54) **PROCEDE DE PYROLYSE RAPIDE DE PARTICULES ORGANIQUES DE BIOMASSE AVEC INJECTION À CONTRE-COURANT DE GAZ CHAUDS**

SCHNELLPYROLYSEVERFAHREN VON ORGANISCHEN BIOMASSETEILCHEN MIT INJEKTION VON HEISSEN GASEN GEGEN DEN STROM

QUICK-PYROLYSIS PROCESS OF ORGANIC PARTICLES OF BIOMASS WITH COUNTER-CURRENT INJECTION OF HOT GASES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.11.2015 FR 1561355**

(43) Date de publication de la demande:
**31.05.2017 Bulletin 2017/22**

(73) Titulaire: **COMMISSARIAT À L'ÉNERGIE ATOMIQUE ET AUX ÉNERGIES ALTERNATIVES 75015 Paris (FR)**

(72) Inventeurs:
• **RAVEL, Serge**
  **38100 Grenoble (FR)**
• **CASTELLI, Pierre**
  **38330 Saint Nazaire les Eymes (FR)**
• **PERRET, Christian**
  **38000 Grenoble (FR)**

(74) Mandataire: **Brevalex**
  **95, rue d'Amsterdam**
  **75378 Paris Cedex 8 (FR)**

(56) Documents cités:
WO-A1-2011/050555    DE-A1-102008 047 563
US-A- 2 582 710    US-A- 2 614 069
US-A- 4 931 171    US-A1- 2008 086 946
US-A1- 2008 197 012    US-A1- 2012 228 112
US-B1- 7 202 389

• EOIN BUTLER ET AL: "A review of recent laboratory research and commercial developments in fast pyrolysis and upgrading", RENEWABLE AND SUSTAINABLE ENERGY REVIEWS, ELSEVIERS SCIENCE, NEW YORK, NY, US, vol. 15, no. 8, 1 octobre 2011 (2011-10-01), pages 4171-4186, XP002669142, ISSN: 1364-0321, DOI: 10.1016/J.RSER.2011.07.035 [extrait le 2011-09-16]
• A.V. BRIDGWATER: "Review of fast pyrolysis of biomass and product upgrading", BIOMASS AND BIOENERGY, vol. 38, 3 mars 2011 (2011-03-03), pages 68-94, XP055209446, ISSN: 0961-9534, DOI: 10.1016/j.biombioe.2011.01.048

EP 3 173 459 B1

## Description

### DOMAINE TECHNIQUE

La présente invention se rapporte au domaine de la pyrolyse rapide, procédé par lequel des matières organiques solides sont soumises à de hautes températures, dans un environnement pauvre en oxygène ou dépourvu d'oxygène, pour former d'autres produits, comprenant des gaz et de la matière, solide et liquide sous forme de vapeur (condensable à basse température).

l'invention s'applique à la pyrolyse rapide de matières organiques de biomasse, regroupant l'ensemble des matières organiques d'origine végétale, animale ou fongique, pour obtenir notamment de l'huile pyrolytique et du coke pyrolytique utilisables par exemple comme combustibles. En particulier, l'invention peut permettre la production d'huile pyrolytique pour une substitution partielle ou totale de combustibles fossiles, utilisés par exemple dans une chaudière.

L'invention propose ainsi un procédé de pyrolyse rapide de particules organiques de biomasse mis en œuvre dans un réacteur de pyrolyse rapide de particules organiques de biomasse avec une injection à contre-courant de gaz chauds neutres entrant au contact des particules tombant par gravité.

### ÉTAT DE LA TECHNIQUE ANTÉRIEURE

La pyrolyse est un procédé bien connu dans lequel des composés organiques sont soumis à des températures élevées, pouvant par exemple aller de 300°C à 1000°C, dans un environnement pauvre en oxygène ou dépourvu d'oxygène pour éviter l'oxydation et la combustion. Dans ces conditions, la matière se déshydrate puis subit une thermolyse, c'est-à-dire une décomposition thermique. Ainsi, la pyrolyse permet généralement d'obtenir trois types de composés, à savoir du coke de pyrolyse ou coke pyrolytique, encore désigné par le terme « char », de l'huile de pyrolyse ou huile pyrolytique et des gaz, notamment des gaz non condensables, comprenant par exemple du monoxyde de carbone $(CO)$, du dioxyde de carbone $(CO_2)$, du dihydrogène $(H_2)$, du méthane $(CH_4)$, entre autres.

Deux approches à la pyrolyse sont envisageables, à savoir la pyrolyse lente et la pyrolyse rapide, et trois gammes de température sont envisageables, à savoir basse, haute ou très haute température.

Pour la pyrolyse lente à basse température, la matière est chauffée à une température modérée, typiquement entre 400 et 500°C, requérant ainsi un plus grand temps de séjour, généralement entre 10 et 60 minutes, afin de maximiser le rendement en matière solide. Ces conditions favorisent la production de coke pyrolytique au détriment des vapeurs pyrolytiques, et donc de l'huile pyrolytique.

A l'inverse, la pyrolyse rapide s'effectue à haute température, typiquement entre 500 et 600°C, pendant un temps de séjour compris entre 1 et 10 secondes, et génère principalement des vapeurs pyrolytiques, permettant d'obtenir de l'huile pyrolytique au détriment du coke pyrolytique et des gaz incondensables. La pyrolyse rapide à très haute température (supérieure à 800°C) favorise la production de gaz incondensables.

De façon plus particulière, la pyrolyse rapide du bois a fait l'objet de nombreux travaux depuis plusieurs années et a permis d'élaborer plusieurs types de procédés industriels de pyrolyse.

Le principe de la pyrolyse rapide du bois repose sur l'application au bois d'un très fort flux de chaleur, typiquement supérieur à $10^5$ W.m$^{-2}$, pour provoquer un échauffement rapide et la dégradation du bois. Lorsque cette pyrolyse a lieu autour de 500°C, la dégradation produit majoritairement des vapeurs condensables pyrolytiques, formant l'huile pyrolytique, qui sont refroidies le plus vite possible puis collectées, typiquement au bout de quelques secondes, afin d'éviter qu'elles ne réagissent et produisent des gaz. L'huile pyrolytique obtenue peut ensuite être utilisée comme combustible car elle possède un pouvoir calorifique de l'ordre de 16 MJ/kg. De par ses propriétés spécifiques, notamment en termes de viscosité, si l'on désire la brûler, il est alors nécessaire de prévoir l'emploi de brûleurs adaptés.

La grande majorité des procédés industriels de pyrolyse rapide du bois de l'art antérieur repose sur l'utilisation de lits fluidisés bouillonnants ou circulants. On peut ainsi citer, par exemple, les lits fluidisés produits par la société canadienne Dynamotive Energy Systems, les lits fluidisés de la société américaine Ensyn, le cône rotatif de la société néerlandaise BTG BioLiquids ou encore la pyrolyse ablative. Les revues suivantes détaillent ces types de procédés, à savoir : la revue « Review of fast pyrolysis of biomass and product upgrading », A.V Bridgewater, Biomass and bioenergy, 38 (2012), 68-94 ; et la revue « A review of recent laboratory research and commercial developments in fast pyrolysis and upgrading », E. Butler et al, Renewable and sustainable Energy Reviews, 15 (2011), 4171-4186. D'autres procédés connus sont divulgués dans les documents US 2 614 069 A et US 2008/197012 A1.

Néanmoins, les procédés industriels de type connu de l'art antérieur sont relativement complexes à piloter, et nécessitent du personnel qualifié. De plus, pour atteindre une rentabilité acceptable, il faut prévoir des installations de taille moyenne ou de grande taille, avec une production de l'ordre d'une à quelques dizaines de tonnes par heure.

De ce fait, il existe un besoin pour proposer un réacteur de pyrolyse rapide reposant sur une technologie simple, robuste et qui soit de taille modérée pour produire majoritairement de l'huile pyrolytique à une échelle locale.

On connaît la technologie des réacteurs à flux entraînés (RFE) pour des installations de production de biocarburant de seconde génération. Ces réacteurs sont destinés à des installations de très grande taille, avec une production comprise entre 50 et 100 tonnes par heure, fonctionnant sous haute pression, typiquement de 30 à 80 bars, et à haute température, autour de 1500°C. Ces réacteurs servent à la gazéification des composés organiques pour maximiser la production de gaz.

Si l'on cherche à maximiser la production d'huile pyrolytique avec ce type de réacteur à flux entraîné, il faut se placer autour de 500°C et travailler autour de la pression atmosphérique pour avoir un dispositif de conception simplifiée.

Il n'existe toutefois que très peu de solutions décrites dans l'art antérieur pour permettre la production d'huile pyrolytique avec un réacteur à flux entraîné. On connaît ainsi principalement deux installations pilotes de pyrolyse rapide à l'aide d'un réacteur à flux entraîné, à savoir : l'installation conçue par l'Institut de Recherche américain Georgia Tech (GTRI pour « Georgia Tech Research Institute »), et l'installation développée par la société belge Egemin.

L'installation du GTRI, prévue pour un débit de biomasse de 50 kg/h, est décrite dans le brevet US 4,891,459 A et se trouve également mentionnée dans la publication « The Georgia Tech entrained flow pyrolysis process - Pyrolysis and gasification », Kovac and O'Neil, Elsevier applied science (1989), 159-179. Dans cette installation, les particules sont injectées en bas du réacteur et les produits obtenus sont collectés en haut du réacteur. Le chauffage est réalisé par l'intermédiaire d'un brûleur externe, alimenté par du propane, permettant de mélanger un gaz très chaud, autour de 927°C, au flux de particules injectées.

L'installation de Egemin, prévue pour un débit de biomasse de 200 kg/h, est par exemple mentionnée dans la publication « The Egemin flash pyrolysis process : commissioning and initial results », Maniatis, K et al, Advance in thermochemical biomass conversion (1994), 1257-1264. Dans cette installation, le chauffage est réalisé par un brûleur interne, alimenté par du propane, permettant de chauffer le gaz jusqu'à environ 700°C, avec une dilution à l'azote pour éviter de trop hautes montées de température.

Dans les deux installations décrites ci-dessus, le réacteur pyrolytique, prévu pour fonctionner entre 400 et 600°C, n'est pas isotherme, ce qui ne permet pas d'avoir un bon contrôle de la réaction, de sorte que les rendements obtenus sont faibles, soit entre 40 et 60 %. Par ailleurs, la granulométrie des particules utilisées, jusqu'à 1,5 et 2,5 mm, ne leur permet pas de séjourner suffisamment longtemps dans le réacteur pour leur permettre d'être chauffées jusqu'à cœur afin d'être entièrement converties. De cette façon, la taille de particules non adaptée conduit à de faibles rendements en huile pyrolytique.

## EXPOSÉ DE L'INVENTION

Il existe ainsi un besoin pour proposer un nouveau procédé mettent un œuvre un type de réacteur de pyrolyse rapide de particules organiques de biomasse, permettant d'optimiser la production d'huile pyrolytique en assurant un transfert de chaleur optimum aux particules de biomasse.

L'invention a pour but de remédier au moins partiellement aux besoins mentionnés précédemment et aux inconvénients relatifs aux réalisations de l'art antérieur.

L'invention a pour objet, selon l'un de ses aspects, un procédé selon la revendication 1.

De façon avantageuse, les gaz de pyrolyse générés remontant avec le flux gazeux ont un temps de séjour minimisé, ce qui évite leur évolution par craquage thermique.

Grâce à l'invention, il peut être possible d'obtenir un nouveau type de procédé de pyrolyse rapide de particules organiques de biomasse permettant de répondre aux besoins énoncés précédemment. En particulier, le réacteur est de conception simplifiée. De plus, il permet d'améliorer les échanges thermiques par le fonctionnement à contre-courant et favorise ainsi la pyrolyse rapide. Le flux à contre-courant permet également d'entraîner les gaz dès leur production, et notamment les gaz condensables, de sorte que leur temps de séjour est réduit. Ceci permet d'éviter l'évolution thermique des vapeurs condensables vers des goudrons dits « secondaires », moins privilégiés. Autrement dit, il est possible de mieux conserver les vapeurs condensables dites « primaires » par rapport à d'autres solutions de l'art antérieur pour lesquelles le temps de séjour des gaz est plus long. Par ailleurs, il peut être possible de réaliser une intégration énergétique du réacteur par une valorisation des gaz incondensables. Il est également possible d'utiliser le char pour le valoriser dans le procédé ou comme produit combustible seul ou en mélange avec l'huile de pyrolyse.

Le procédé de pyrolyse rapide selon l'invention peut en outre comporter l'une ou plusieurs des caractéristiques suivantes prises isolément ou suivant toutes combinaisons techniques possibles.

Avantageusement, le conduit d'évacuation peut déboucher dans la partie supérieure de l'enceinte de réaction pour permettre l'évacuation des produits issus de la réaction de pyrolyse dans l'enceinte de réaction, ces produits migrant vers la partie supérieure de l'enceinte de réaction.

De façon privilégiée, le diamètre des particules peut être compris entre 200 $\mu$m et 800 $\mu$m.

Le diamètre de l'injecteur tubulaire peut être inférieur au diamètre de l'enceinte de réaction.

Les moyens de transport des particules peuvent être de tout type, et peuvent par exemple comporter un système de vis sans fin, un système de tapis vibrant, entre autres.

Par ailleurs, l'invention a encore pour objet, selon un autre de ses aspects, ce procédé étant mis en œuvre dans une installation de pyrolyse rapide de particules organiques de biomasse, caractérisée en ce qu'elle comporte :

- un réacteur de pyrolyse tel que défini précédemment,
- un brûleur, en amont du réacteur, configuré pour produire les gaz chauds neutres circulant dans le conduit d'injection à contre-courant de gaz chauds neutres,
- un séparateur, en aval du réacteur, configuré pour permettre la séparation du coke pyrolytique et du flux de gaz condensables et incondensables,
- un condenseur, en aval du séparateur, configuré pour permettre la séparation de l'huile pyrolytique et du flux de gaz incondensables.

L'installation peut en outre comporter des moyens d'injection d'une première partie du flux de gaz incondensables issu du condenseur vers le brûleur après réchauffement par la combustion de cette première partie du flux de gaz incondensables.

L'installation peut de plus comporter des moyens d'injection d'une deuxième partie du flux de gaz incondensables issu du condenseur vers un échangeur de chaleur du brûleur pour former les gaz chauds neutres circulant dans le conduit d'injection à contre-courant de gaz chauds neutres, la chaleur étant produite à partir du brûleur alimenté par la première partie du flux de gaz incondensables.

L'installation peut également comporter un premier échangeur de chaleur placé en amont du condenseur, pour préchauffer la deuxième partie du flux de gaz incondensables issus du condenseur.

Le procédé peut être mis en œuvre au moyen d'une installation de pyrolyse rapide telle que définie précédemment, et peut comporter l'étape consistant à utiliser les gaz incondensables issus du condenseur pour chauffer les gaz chauds neutres circulant dans le conduit d'injection à contre-courant de gaz chauds neutres et/ou pour former les gaz chauds neutres circulant dans le conduit d'injection à contre-courant de gaz chauds neutres.

Le procédé peut en outre comporter l'étape d'injection d'un gaz d'entraînement dans l'enceinte de réaction du réacteur pour améliorer l'injection de particules dans l'enceinte de réaction.

Le procédé peut encore comporter l'étape d'utilisation du coke pyrolytique comme combustible pour apporter de la chaleur, notamment au chauffage du gaz d'entraînement.

Le procédé peut également comporter l'étape d'ajout d'un échangeur de chaleur entre le séparateur et le condenseur pour permettre la récupération de chaleur.

Le procédé peut en outre comporter l'étape d'utilisation du coke pyrolytique en mélange avec l'huile pyrolytique pour produire un combustible.

Le procédé de pyrolyse rapide selon l'invention peuvent comporter l'une quelconque des caractéristiques énoncées dans la description, prises isolément ou selon toutes combinaisons techniquement possibles avec d'autres caractéristiques.

## BRÈVE DESCRIPTION DES DESSINS

L'invention pourra être mieux comprise à la lecture de la description détaillée qui va suivre, d'un exemple de mise en œuvre non limitatif de celle-ci, ainsi qu'à l'examen des figures, schématiques et partielles, du dessin annexé, sur lequel :

- la figure 1 représente un schéma illustrant un exemple de réacteur de pyrolyse rapide conforme au procédé de l'invention,
- la figure 2 illustre, sous forme graphique, la granulométrie des particules utilisées dans le réacteur de la figure 1, avec une distribution représentant le pourcentage de particules en fonction de leur diamètre du type de la distribution de Rosin-Rammler,
- les figures 3A, 3B et 3C illustrent respectivement la trajectoire des particules de biomasse, la température des gaz, et la fraction molaire en vapeur d'eau dans l'enceinte de réaction du réacteur de la figure 1, selon une première configuration,
- la figure 4 représente l'évolution de la fraction massique de matière sèche non pyrolysée dans les particules du réacteur de la figure 1, en fonction du temps, selon une première configuration,
- les figures 5A, 5B et 5C illustrent respectivement la trajectoire des particules de biomasse, la température des gaz, et la fraction molaire en vapeur d'eau dans l'enceinte de réaction du réacteur de la figure 1, selon une deuxième configuration,
- la figure 6 représente l'évolution de la fraction massique de matière sèche non pyrolysée dans les particules du réacteur de la figure 1, en fonction du temps, selon une deuxième configuration, et
- la figure 7 représente un schéma illustrant un exemple d'installation de pyrolyse rapide conforme au procédé de l'invention, comportant le réacteur de pyrolyse rapide de la figure 1.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

## EXPOSÉ DÉTAILLÉ D'UN MODE DE RÉALISATION PARTICULIER

Dans toute la description, il est noté que les termes supérieur(e) et inférieur(e) sont à considérer par rapport à la direction verticale, direction selon laquelle les particules tombent sous l'effet de la gravité terrestre. En particulier, la partie supérieure de l'enceinte de réaction est située au-dessus de la partie inférieure de l'enceinte de réaction. Autrement dit, la partie supérieure est la partie haute de l'enceinte, et la partie inférieure est la partie basse de l'enceinte. Par ailleurs, les termes amont et aval sont à considérer par rapport au sens d'écoulement normal du flux considéré (de l'amont vers l'aval), en particulier le flux de gaz et/ou de particules.

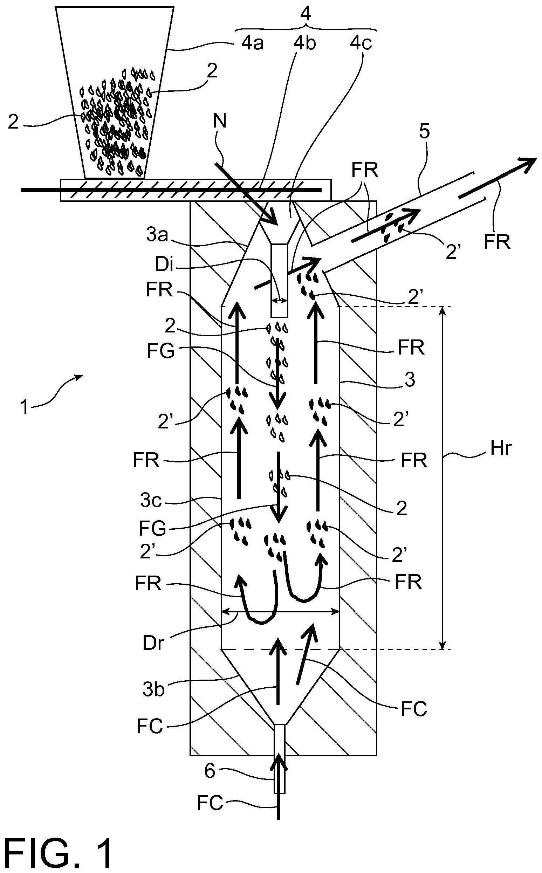

En référence à la figure 1, on a représenté schématiquement un exemple de réalisation d'un réacteur 1 de pyrolyse rapide de particules 2 organiques de biomasse conforme au procédé de l'invention.

Les particules 2 organiques de biomasse peuvent être de tout type, étant réalisées à base de matières organiques d'origine végétale, animale et/ou fongique. Elles peuvent se présenter sous la forme d'une poudre de particules 2 de biomasse.

Ainsi, le réacteur 1 comporte tout d'abord une enceinte tubulaire de réaction 3, dans laquelle se produit la réaction de pyrolyse des particules 2.

Cette enceinte de réaction 3 est formée par un corps principal cylindrique 3c aux extrémités duquel sont situées la partie supérieure 3a et la partie inférieure 3b de l'enceinte de réaction 3. Ces parties supérieure 3a et inférieure 3b sont de forme tronconique. Toutefois, l'invention n'est pas limitée à ce type de forme. Les parties supérieure 3a et inférieure 3b pourraient en variante être de forme cylindrique, notamment de même diamètre que le corps principal cylindrique 3c.

Par ailleurs, le réacteur 1 comporte un dispositif d'injection 4 des particules 2 dans la partie supérieure 3a de l'enceinte de réaction 3.

Ce dispositif d'injection 4 comporte un réservoir 4a, ou trémie 4a, de particules 2, comportant les particules 2 destinées à subir la réaction de pyrolyse dans l'enceinte de réaction 3. Ce réservoir 4a est situé extérieurement à l'enceinte de réaction 3.

Le dispositif d'injection 4 comporte en outre un injecteur tubulaire 4c des particules 2 dans l'enceinte de réaction 3, permettant l'injection d'un débit stable et connu de particules 2.

Cet injecteur tubulaire 4c est situé dans la partie supérieure 3a de l'enceinte de réaction 3. Il est présent en partie haute, suivi par une forme cylindrique en partie basse au niveau de laquelle s'effectue l'éjection des particules 2. Le diamètre Di de la partie cylindrique de l'injecteur tubulaire 4c est avantageusement inférieur au diamètre Dr du corps cylindrique 3c de l'enceinte de réaction 3. L'embout de sortie de l'injecteur tubulaire 4c peut être avantageusement équipé d'un déflecteur des particules permettant une répartition plus large des particules dans le réacteur. En outre, la hauteur utile de l'enceinte de réaction 3 est définie de sorte à permettre un temps de chute des particules 2 qui soit suffisant pour que celles-ci puissent subir la réaction de pyrolyse entièrement.

De plus, le dispositif d'injection 4 comporte des moyens de transport 4b des particules 2 issues du réservoir 4a vers l'injecteur tubulaire 4c, externes à l'enceinte de réaction 3. Ces moyens de transport 4b peuvent être de tout type. Dans l'exemple représenté, ils sont formés par une vis sans fin. En variante, ils pourraient aussi être formés par un tapis vibrant, par exemple.

L'injection des particules 2 par le biais du dispositif d'injection 4 dans l'enceinte de réaction 3 permet alors de former un flux tombant par gravité FG de particules 2 dans l'enceinte de réaction 4, de sorte à laisser les particules 2 traverser une partie de la hauteur de l'enceinte de réaction 3 et avant sa partie inférieure 3b.

Lors de l'injection des particules 2 dans l'injecteur tubulaire 4c, des moyens d'injection N d'un gaz d'entraînement, par exemple de l'azote, sont mis en place dans l'injecteur tubulaire 4c du dispositif d'injection 4 afin d'améliorer et d'aider l'injection des particules 2 dans l'enceinte de réaction 3. L'injection d'un tel gaz neutre d'entraînement sert également d'inertage de la distribution de particules 2 vers l'enceinte de réaction 3 et permet ainsi d'éviter le retour de gaz de pyrolyse vers le dispositif d'injection 4.

En outre, le réacteur 1 comporte également un conduit d'évacuation 5 débouchant dans la partie supérieure 3a de l'enceinte de réaction 3 pour permettre l'évacuation des produits issus de la réaction de pyrolyse dans l'enceinte de réaction 3, ces produits étant entraînés vers la partie supérieure 3a de l'enceinte de réaction 3 et comprenant des gaz, formant un flux de gaz condensables et incondensables FR, et des particules pyrolysées 2', destinés à former respectivement de l'huile pyrolytique, des gaz incondensables et de la coke pyrolytique, appelée encore « char ».

Par ailleurs, afin de réaliser une réaction de pyrolyse rapide à flux entraîné en contre-courant, le réacteur 1 comporte encore un conduit d'injection à contre-courant 6 de gaz chauds neutres dans la partie inférieure 3b de l'enceinte de réaction 3.

Ce conduit d'injection à contre-courant 6 permet de former un flux à contre-courant FC de gaz chauds neutres entrant au contact du flux tombant par gravité FG de particules 2, de sorte à générer la réaction de pyrolyse rapide des particules 2.

La température de ces gaz chauds neutres formant le flux à contre-courant FC est préférentiellement comprise entre 500 et 600°C, tandis que le diamètre des particules 2 contenues dans le flux tombant par gravité FG de particules 2 est compris préférentiellement entre 200 µm et 1 mm, avantageusement entre 200 µm et 800 µm.

Le débit de gaz chauds formant le flux à contre-courant FC et le diamètre Dr du corps principal 3c de l'enceinte de réaction 3 sont calculés de sorte que la vitesse des gaz chauds soit suffisante pour entraîner les particules pyrolysées 2' vers la partie supérieure 3a de l'enceinte de réaction 3.

Au sein de l'enceinte de réaction 3, la réaction de pyrolyse se déroule de la manière décrite ci-après. Lorsque les particules 2 du flux tombant par gravité FG rencontrent les gaz chauds du flux à contre-courant FC, ces particules 2 s'échauffent et perdent leur eau résiduelle. Lorsque les particules 2 atteignent une température d'environ 300°C, la réaction de pyrolyse commence à se réaliser. Les particules 2 continuent alors à se réchauffer jusqu'à être en équilibre avec la température des gaz chauds, qui eux se refroidissent. Dès de le début de la réaction de pyrolyse, les particules 2 relâchent des gaz condensables et incondensables formant le flux de gaz FR. Les particules 2 perdent ainsi une grande partie de leur volume et de leur masse, notamment de l'ordre de 85 % à la température d'environ 500°C à 550°C, 70 % de la masse étant convertie en gaz condensables destinés à former de l'huile de pyrolyse et 15 % en gaz incondensables. La densité des particules 2 devient alors faible et à partir d'un certain débit de gaz chauds, les particules alors pyrolisées 2' sont entraînées vers le haut du réacteur 1 dans sa partie supérieure 3a avec le flux de gaz condensables et incondensables FR pour être évacuées au travers du conduit d'évacuation 5.

A titre d'exemple, avec une enceinte de réaction 3 comprenant un corps principal 3c de diamètre Dr égal à environ 20 cm et de hauteur Hr égale à environ 3,6 m, un débit de particules 2 de biomasse égal à environ 10 kg/h et un débit de gaz chauds dans le flux à contre-courant FC de l'ordre de 80 Nm$^3$/h, on obtient une vitesse des gaz chauds de l'ordre de 2 m/s, ce qui permet à près de 95 % des particules 2, de diamètre compris entre 0,1 et 1 mm, de subir la réaction de pyrolyse.

Afin d'évaluer le fonctionnement du réacteur de pyrolyse rapide 1 selon l'invention, différentes simulations ont été réalisées avec le logiciel Fluent de simulation de mécanique des fluides.

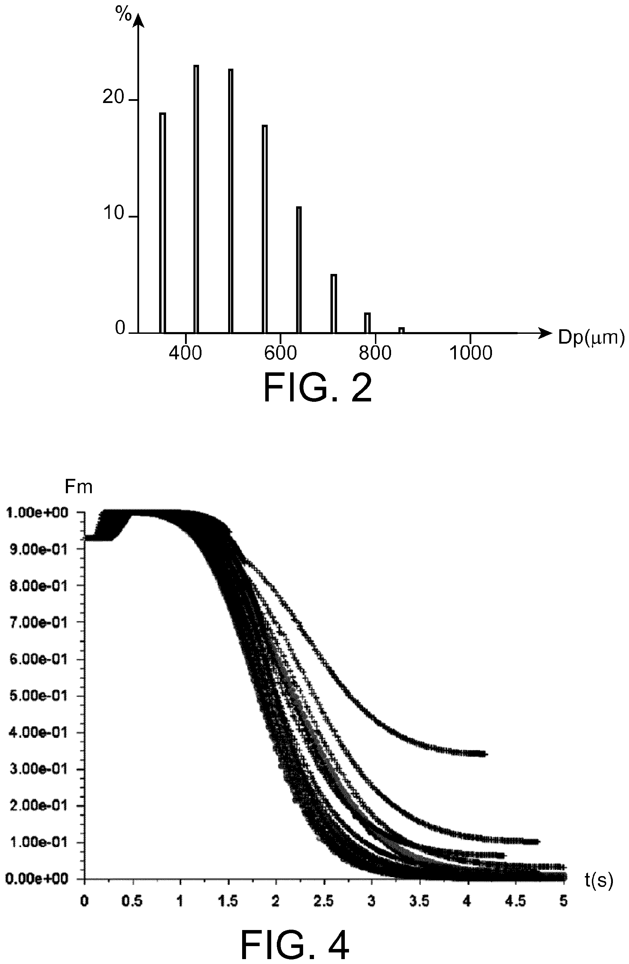

On a ainsi considéré un débit de particules 2 de biomasse de l'ordre de 10 kg/h, ces particules 2 étant des particules de bois avec un taux d'humidité de 7 % et présentant une granulométrie du type de la distribution de Rosin-Rammler relativement au diamètre Dp des particules 2, représentée sur la figure 2. Ces particules 2 présentent ainsi un diamètre moyen de l'ordre de 0,500 mm, un diamètre minimum de l'ordre de 0,350 mm et un diamètre maximum de l'ordre de 1 mm.

Par ailleurs, on a considéré que l'enceinte de réaction 3 comporte un corps principal 3c de diamètre Dr de l'ordre de 20 cm, ses parois étant adiabatiques. L'injecteur tubulaire 4c présente quant à lui un diamètre Di de l'ordre de 5 cm.

Les particules 2 de biomasse sont de plus injectées avec l'aide d'un gaz d'entraînement sous la forme d'azote à une vitesse de l'ordre de 0,1 m/s et à une température d'environ 27°C. Le flux à contre-courant FC comporte quant à lui de l'azote injecté à environ 550°C.

Deux configurations ont été simulées et optimisées en fonction de la hauteur Hr du corps principal 3c de l'enceinte de réaction 3 et de la vitesse d'injection du flux à contre-courant FC.

Première configuration

Dans la première configuration, la hauteur Hr du corps principal 3c de l'enceinte de réaction 3 est de 3,6 m, tandis que la vitesse d'injection du flux à contre-courant FC est de 1 m/s.

Afin de quantifier la performance du réacteur 1, on définit deux indicateurs :

- le taux de pyrolyse $\tau_p$ qui correspond au rapport entre le débit massique des produits de pyrolyse obtenus et le débit massique des particules de biomasse sèches injectées, soit :

$$\tau_p = [\text{débit massique des produits de pyrolyse obtenus / débit massique des particules de biomasse injectées}],$$

- le rendement $r_g$ en goudrons non craqués qui correspond au rapport entre le débit de goudrons non craqués obtenu et le débit de goudrons idéalement obtenu avec une pyrolyse complète et en l'absence de craquage, soit :

$$r_g = [\text{débit de goudrons non craqués obtenu / débit de goudrons idéalement}$$

$$\text{obtenu avec pyrolyse complète et absence de craquage}].$$

Ainsi, dans cette première configuration avec injection du flux à contre-courant FC à 1 m/s et hauteur Hr du corps principal 3c de l'enceinte de réaction 3 à 3,6 m, la pyrolyse des particules 2 de biomasse est réalisée avec un taux $\tau_p$ égal à 99 %, tandis que le rendement en goudrons non craqués $r_g$ est de 98 %.

Ainsi, la pyrolyse est pratiquement complète et le rendement en goudrons non craqués est très proche du maximum, la cinétique de craquage étant lente. Ceci signifie alors que les goudrons primaires sortent du réacteur 1 sans subir d'évolution et peuvent donc être récupérés, à savoir condensés, sous forme d'huile pyrolytique.

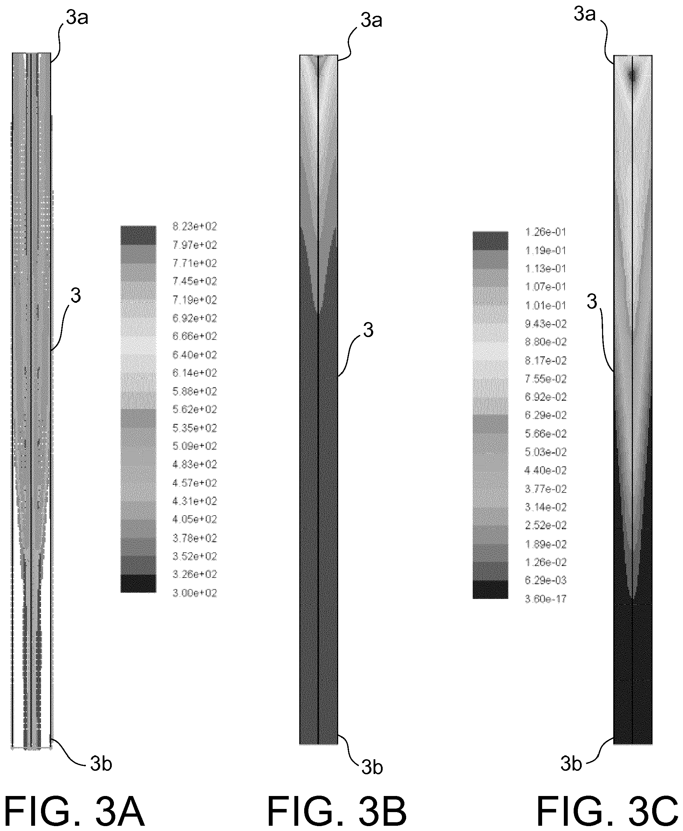

Les figures 3A, 3B et 3C illustrent respectivement la trajectoire des particules de biomasse, la température des gaz exprimée en Kelvin (K), et la fraction molaire en vapeur d'eau dans l'enceinte de réaction 3 du réacteur 1. De plus, la figure 4 représente l'évolution de la fraction massique Fm de matière sèche non pyrolysée dans les particules 2 en fonction du temps t, exprimé en secondes.

On constate ainsi que les particules 2, après séchage et pyrolyse, sont évacuées par le haut de l'enceinte de réaction 3 à l'état de char pratiquement en totalité. Seules les particules 2 les plus grosses ne remontent pas et restent en bas de l'enceinte 3 avec une pyrolyse moins complète. Ainsi, 93 % de la masse sortante de particules est évacuée par le haut, les 7 % restants étant collectés en bas. De plus, la zone froide de l'enceinte de réaction 3 est située en haut de celle-ci. En outre, la vapeur d'eau remonte immédiatement après avoir été produite par les particules 2.

Par ailleurs, la hauteur Hr de 3,60 m a été optimisée pour une vitesse d'injection du flux à contre-courant FC de 1 m/s. Cela signifie qu'une hauteur plus grande ne permettrait pas d'améliorer le rendement du réacteur 1. A l'inverse, une hauteur plus faible ferait diminuer ce même rendement.

Deuxième configuration

Dans la deuxième configuration, la hauteur Hr du corps principal 3c de l'enceinte de réaction 3 est de 3 m, tandis que la vitesse d'injection du flux à contre-courant FC est de 1,5 m/s.

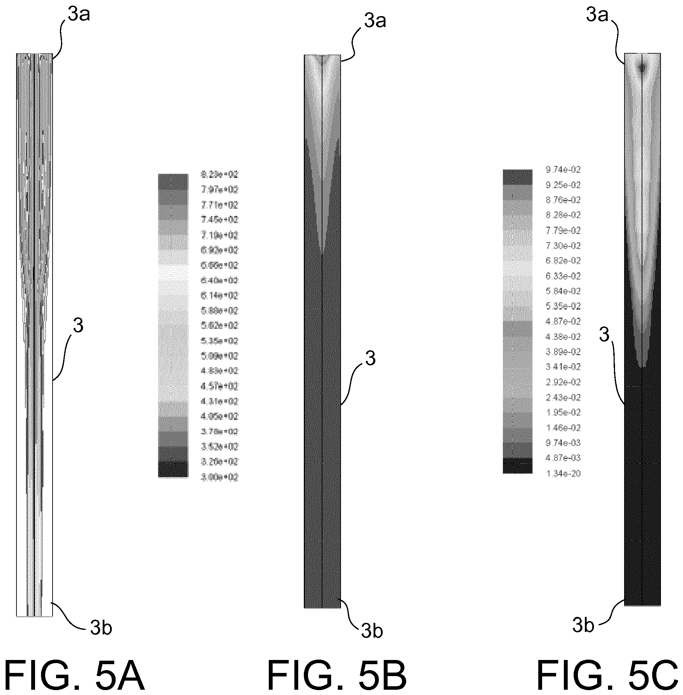

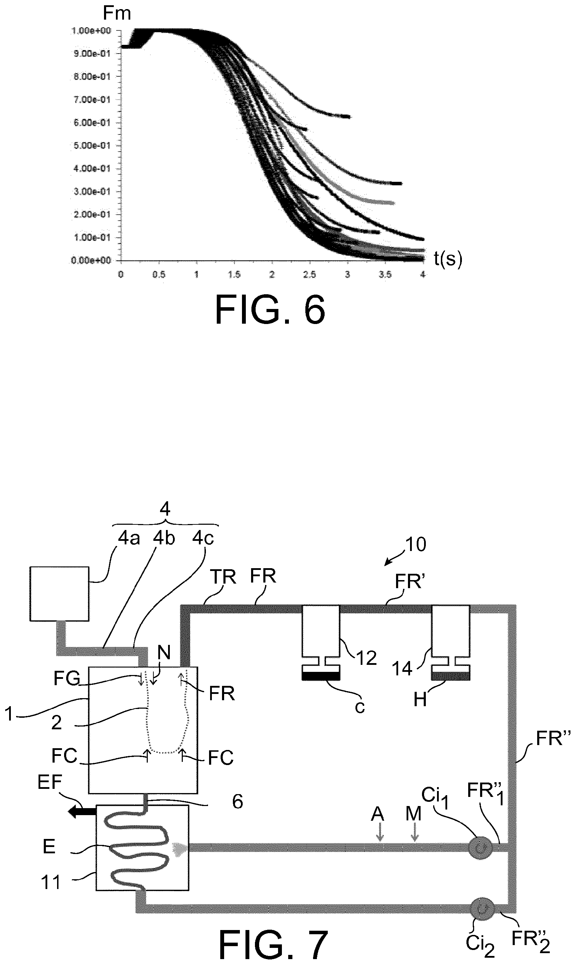

Les figures 5A, 5B et 5C illustrent respectivement la trajectoire des particules de biomasse, la température des gaz exprimée en Kelvin (K), et la fraction molaire en vapeur d'eau dans l'enceinte de réaction 3 du réacteur 1. De plus, la figure 6 représente l'évolution de la fraction massique Fm de matière sèche non pyrolysée dans les particules 2 en fonction du temps t, exprimé en secondes.

On a ainsi pu constater qu'augmenter la vitesse d'injection du flux à contre-courant FC à 1,5 m/s présente deux avantages : avec une vitesse d'injection de 1,5 m/s, toutes les particules 2 ressortent par le haut de l'enceinte de réaction 3 à l'exception d'une infime partie ; par ailleurs, la hauteur de l'enceinte de réaction 3 optimisée est ramenée à 3 m. En contrepartie, la performance du réacteur 1 est moins bonne puisque le taux de pyrolyse $\tau_p$ est de 88 % et que le rendement $r_g$ en goudrons non craqués est de 87 %.

On va maintenant décrire en référence à la figure 7 une installation 10 de pyrolyse rapide de particules 2 organiques de biomasse comprenant un réacteur 1 de pyrolyse rapide tel que celui décrit précédemment en référence à la figure 1.

Comme on peut le voir sur cette figure 7, l'installation 10 comporte, en plus du réacteur 1, un brûleur 11 comprenant un échangeur de chaleur E, placé en amont du réacteur 1 et configuré pour produire les gaz chauds formant le flux à contre-courant FC circulant dans le conduit d'injection à contre-courant 6 de gaz chauds.

De plus, l'installation 10 comporte un séparateur 12 (ou cyclone), formant un dispositif de filtration, placé en aval du réacteur 1 et configuré pour permettre la séparation de coke pyrolytique C, ou char C, par filtration à une température supérieure à 250°C, et d'un flux de gaz condensables et incondensables FR' à partir des produits issus de la réaction de pyrolyse de l'enceinte de réaction 3, comprenant un flux de gaz condensables et incondensables FR à la température TR de l'ordre de 400°C et des particules pyrolysées 2'.

En outre, l'installation 10 comporte également un condenseur 14, placé en aval du séparateur 12 et configuré pour permettre la production d'huile pyrolytique H et d'un flux de gaz incondensables FR" à partir du flux de gaz condensables et incondensables FR' issu du séparateur 12. Dans ce condenseur 14, la température est préférentiellement la plus basse possible, notamment de l'ordre de 0°C pour un procédé industriel.

De façon avantageuse, l'installation prévoit une intégration énergétique du flux de gaz incondensables FR" avec la formation d'un circuit fermé pour rendre le procédé de pyrolyse rapide plus performant.

En particulier, l'installation 10 comporte des moyens d'injection sous la forme d'un premier circulateur $Ci_1$ pour permettre d'injecter une première partie $FR"_1$ du flux de gaz incondensables FR" issu du condenseur 14 vers le brûleur 11 après réchauffement de cette première partie $FR"_1$ par combustion de ces gaz incondensables en mélange avec un flux d'air A. Le méthane M est quant à lui préférentiellement utilisé pour le préchauffage lors des phases de démarrage ou comme appoint pour maintenir la température. Il est à noter que l'on peut aussi utiliser un seul circulateur pour les deux lignes FR"$_1$ et FR"$_2$, avec une vanne de réglage sur chaque ligne pour régler les débits respectifs.

De plus, l'installation 10 comporte des moyens d'injection sous la forme d'un deuxième circulateur Ci$_2$ pour permettre d'injecter une deuxième partie FR"$_2$ du flux de gaz incondensables FR" issu du condenseur 14 vers l'échangeur de chaleur E du brûleur 11 pour former le flux à contre-courant FC de gaz chauds circulant dans le conduit d'injection à contre-courant 6 de gaz chauds.

Plus particulièrement, le brûleur 11, plus précisément la chambre dans laquelle est placé le brûleur 11, comporte un échangeur de chaleur E dans lequel circule la deuxième partie FR"$_2$ du flux de gaz incondensables FR", celle-ci étant réchauffée par la première partie FR"$_1$ du flux de gaz incondensables FR", elle-même chauffée par sa combustion avec le flux d'air A et de méthane M. Après passage dans le brûleur 11, cette première partie du flux de gaz incondensables FR"$_1$ est évacuée sous forme de fumées par la sortie EF du brûleur 11 après avoir cédé sa chaleur au flux de gaz incondensables FR"$_2$ par le biais de l'échangeur de chaleur E.

L'utilisation des gaz incondensables FR" au niveau du brûleur 11 est avantageuse dans la mesure où les calculs montrent que l'énergie contenue dans ces gaz incondensables est de l'ordre de 8 MJ/Nm$^3$, ce qui est suffisant pour apporter la chaleur nécessaire au réacteur 1. Néanmoins, pour disposer d'une certaine marge de puissance, il est également possible d'apporter un appoint de gaz externe au brûleur, notamment de gaz naturel ou d'un autre type de gaz combustible.

Bien entendu, l'invention n'est pas limitée à l'exemple de réalisation qui vient d'être décrit. Diverses modifications peuvent y être apportées par l'homme du métier, selon les revendications.

En particulier, il peut être possible de récupérer le char C provenant du séparateur 12 et de le brûler, par exemple par le biais de flux d'air A et de méthane M, pour l'injecter également dans le brûleur 11 et apporter de la chaleur complémentaire au réacteur 1.

De plus, il peut aussi être possible de placer un échangeur de chaleur au niveau de la trempe, c'est-à-dire entre le séparateur 12 et le condenseur 14, pour récupérer de la chaleur et l'utiliser pour préchauffer le flux à contre-courant FC de gaz chauds avant son entrée dans l'enceinte de réaction 3.

En outre, le char C et l'huile de pyrolyse H obtenus peuvent être mélangés afin de former un mélange, désigné par le terme « slurry » en anglais, présentant un meilleur pouvoir calorifique en termes de combustion que l'huile de pyrolyse seule.

## Revendications

**1.** Procédé de pyrolyse rapide de particules (2) organiques de biomasse, **caractérisé en ce qu'**il est mis en œuvre au moyen d'un réacteur (1) de pyrolyse rapide à flux entraîné de particules (2) organiques de biomasse, comportant :

- une enceinte tubulaire de réaction (3), dans laquelle se produit la réaction de pyrolyse des particules (2), comprenant une partie supérieure (3a) et une partie inférieure (3b), opposée à la partie supérieure (3a),
- un dispositif d'injection (4) des particules (2) dans la partie supérieure (3a) de l'enceinte de réaction (3), permettant de former un flux tombant par gravité (FG) de particules (2) dans l'enceinte de réaction (4),
- un conduit d'évacuation (5) des produits issus de la réaction de pyrolyse présents dans l'enceinte de réaction (3), comprenant des gaz et des particules pyrolysées (2'), destinés notamment à former de l'huile pyrolytique, de la coke pyrolytique et des gaz incondensables,
- un conduit d'injection à contre-courant (6) de gaz chauds neutres dans la partie inférieure (3b) de l'enceinte de réaction (3), permettant de former un flux à contre-courant (FC) de gaz chauds neutres entrant au contact du flux tombant par gravité (FG) de particules (2), de sorte à générer la réaction de pyrolyse rapide des particules (2), le procédé comportant l'étape d'injection à contre-courant de gaz chauds neutres dans l'enceinte de réaction (3) du réacteur (1) par rapport à l'injection des particules (2), tombant par gravité, destinées à subir la réaction de pyrolyse rapide, la température des gaz chauds neutres étant comprise entre 500 et 600°C, et le diamètre des particules (2) étant compris entre 200 $\mu$m et 1 mm,

le dispositif d'injection (4) des particules (2) comportant un réservoir (4a) de particules (2), contenant les particules (2) et étant disposé extérieurement à l'enceinte de réaction (3), un injecteur tubulaire (4c) des particules (2), situé dans la partie supérieure (3a) de l'enceinte de réaction (3), et des moyens de transport (4b) des particules (2) issues du réservoir (4a) vers l'injecteur tubulaire (4c),

le réacteur comportant des moyens d'injection (N) d'un gaz d'entraînement dans la partie supérieure (3a) de l'enceinte de réaction (3), dans l'injecteur tubulaire (4c) du dispositif d'injection (4), et le procédé comportant l'étape d'injection dudit gaz d'entraînement dans l'enceinte de réaction (3) du réacteur (1) pour améliorer l'injection de particules (2) dans l'enceinte de réaction (3).

**2.** Procédé selon la revendication 1, **caractérisé en ce que** le conduit d'évacuation (5) débouche dans la partie supérieure (3a) de l'enceinte de réaction (3) pour permettre l'évacuation des produits issus de la réaction de pyrolyse dans l'enceinte de réaction (3), ces produits migrant vers la partie supérieure (3a) de l'enceinte de réaction (3).

**3.** Procédé selon la revendication 1 ou 2, **caractérisé en ce que** le diamètre des particules (2) est compris entre 200 $\mu$m et 800 $\mu$m.

**4.** Procédé selon l'une quelconque des revendications précédentes, **caractérisé en ce que** le diamètre (Di) de l'injecteur tubulaire (4c) est inférieur au diamètre (Dr) de l'enceinte de réaction (3).

**5.** Procédé selon l'une quelconque des revendications précédentes, **caractérisé en ce que** les moyens de transport (4b) des particules (2) comportent un système de vis sans fin ou un système de tapis vibrant.

**6.** Procédé selon l'une quelconque des revendications précédentes, **caractérisé en ce qu'**il est mis en œuvre au moyen d'une installation (10) de pyrolyse rapide de particules (2) organiques de biomasse, comportant :

- le réacteur (1) de pyrolyse rapide,
- un brûleur (11), en amont du réacteur (1), configuré pour produire les gaz chauds neutres circulant dans le conduit d'injection à contre-courant (6) de gaz chauds neutres,
- un séparateur (12), en aval du réacteur (1), configuré pour permettre la séparation du coke pyrolytique (C) et du flux de gaz condensables et incondensables (FR'),
- un condenseur (14), en aval du séparateur (12), configuré pour permettre la séparation de l'huile pyrolytique (H) et du flux de gaz incondensables (FR").

**7.** Procédé selon la revendication 6, **caractérisée en ce que** l'installation comporte des moyens d'injection ($Ci_1$) d'une première partie ($FR"_1$) du flux de gaz incondensables (FR") issu du condenseur (14) vers le brûleur (11) après réchauffement par la combustion de cette première partie ($FR"_1$) du flux de gaz incondensables (FR").

**8.** Procédé selon la revendication 6 ou 7, **caractérisée en ce que** l'installation comporte des moyens d'injection ($Ci_2$) d'une deuxième partie ($FR"_2$) du flux de gaz incondensables (FR") issu du condenseur (14) vers un échangeur de chaleur (E) du brûleur (11) pour former les gaz chauds neutres circulant dans le conduit d'injection à contre-courant (6) de gaz chauds neutres, la chaleur étant produite à partir du brûleur (11) alimenté par la première partie ($FR"_1$) du flux de gaz incondensables (FR").

**9.** Procédé selon l'une quelconque des revendications 6 à 8, **caractérisé en ce qu'**il comporte l'étape consistant à utiliser les gaz incondensables issus du condenseur (14) pour chauffer les gaz chauds neutres circulant dans le conduit d'injection à contre-courant (6) de gaz chauds neutres et/ou pour former les gaz chauds neutres circulant dans le conduit d'injection à contre-courant (6) de gaz chauds neutres.

**10.** Procédé selon l'une quelconque des revendications précédentes, comportant l'étape d'utilisation du coke pyrolytique (C) comme combustible pour apporter de la chaleur, notamment au chauffage du gaz d'entraînement (N).

**11.** Procédé selon l'une quelconque des revendications précédentes, comportant l'étape d'ajout d'un échangeur de chaleur entre le séparateur (12) et le condenseur (14) pour permettre la récupération de chaleur.

**12.** Procédé selon l'une quelconque des revendications précédentes, comportant l'étape d'utilisation du coke pyrolytique (C) en mélange avec l'huile pyrolytique (H) pour produire un combustible.

**Patentansprüche**

**1.** Verfahren zur Schnellpyrolyse von organischen Biomassepartikeln (2), **dadurch gekennzeichnet, dass** es mittels eines Schnellpyrolysereaktors (1) mit Flugstrom von organischen Biomassepartikeln (2) durchgeführt wird, umfassend:

- eine röhrenförmige Reaktionskammer (3), in der die Pyrolysereaktion der Partikel (2) stattfindet, welche einen oberen Teil (3a) und einen unteren Teil (3b) gegenüber dem oberen Teil (3a) umfasst,
- eine Vorrichtung zum Einspritzen (4) der Partikel (2) in den oberen Teil (3a) der Reaktionskammer (3), welche

EP 3 173 459 B1

die Bildung eines durch die Schwerkraft (FG) in die Reaktionskammer (4) fallenden Stroms von Partikeln (2) erlaubt,
- eine Ausleitleitung (5) für die in der Reaktionskammer (3) vorhandenen Produkte der Pyrolysereaktion, umfassend Gase und pyrolysierte Partikel (2'), die insbesondere dazu bestimmt sind, Pyrolyseöl, Pyrolysekoks und nicht kondensierbare Gase zu bilden,
- eine Gegenstrom-Einspritzleitung (6) für heiße neutrale Gase im unteren Teil (3b) der Reaktionskammer (3), welche erlaubt, einen Gegenstrom (FC) von heißen neutralen Gasen zu bilden, die mit der durch die Schwerkraft fallenden Strömung (FG) der Partikel (2) in Kontakt kommen, um die schnelle Pyrolysereaktion der Partikel (2) zu erzeugen, wobei das Verfahren den Schritt der Gegenstromeinspritzung von heißen neutralen Gasen in die Reaktionskammer (3) des Reaktors (1) bezüglich der Einspritzung von durch die Schwerkraft fallenden Partikeln (2) umfasst, die dazu bestimmt sind, die schnelle Pyrolysereaktion zu durchlaufen, wobei die Temperatur der heißen neutralen Gase zwischen 500 °C und 600 °C liegt, und der Durchmesser der Partikel (2) zwischen 200 um und 1 mm liegt,
wobei die Vorrichtung zum Einspritzen (4) der Partikel (2) einen Tank (4a) für die Partikel (2) umfasst, der die Partikel (2) enthält und außerhalb der Reaktionskammer (3) angeordnet ist, einen röhrenförmigen Injektor (4c) für die Partikel (2), der im oberen Teil (3a) der Reaktionskammer (3) angeordnet ist, und Mittel zum Transportieren (4b) der aus dem Tank (4a) stammenden Partikel (2) zum röhrenförmigen Injektor (4c), wobei der Reaktor Mittel zum Einspritzen (N) eines Eintragsgases in den oberen Teil (3a) der Reaktionskammer (3) in dem röhrenförmigen Injektor (4c) der Einspritzvorrichtung (4) aufweist, und wobei das Verfahren den Schritt des Einspritzens des Eintragsgases in die Reaktionskammer (3) des Reaktors (1) umfasst, um das Einspritzen von Partikeln (2) in die Reaktionskammer (3) zu verbessern.

2. Verfahren nach Anspruch 1, **dadurch gekennzeichnet, dass** die Ausleitleitung (5) in den oberen Teil (3a) der Reaktionskammer (3) mündet, um die Ausleitung der aus der Pyrolysereaktion resultierenden Produkte in der Reaktionskammer (3) zu ermöglichen, wobei diese Produkte in Richtung des oberen Teils (3a) der Reaktionskammer (3) wandern.

3. Verfahren nach Anspruch 1 oder 2, **dadurch gekennzeichnet, dass** der Durchmesser der Partikel (2) zwischen 200 um und 800 um liegt.

4. Verfahren nach einem der vorhergehenden Ansprüche, **dadurch gekennzeichnet, dass** der Durchmesser (Di) des röhrenförmigen Injektors (4c) kleiner ist als der Durchmesser (Dr) der Reaktionskammer (3).

5. Verfahren nach einem der vorhergehenden Ansprüche, **dadurch gekennzeichnet, dass** die Mittel (4b) zum Transport der Partikel (2) ein Schneckensystem oder ein Vibrationsbandsystem umfassen.

6. Verfahren nach einem der vorhergehenden Ansprüche, **dadurch gekennzeichnet, dass** es mittels einer Anlage (10) zur Schnellpyrolyse von organischen Biomassepartikeln (2) durchgeführt wird, die Folgendes umfasst:

   - den Schnellpyrolysereaktor (1),
   - einen Brenner (11) stromaufwärts des Reaktors (1), der zur Erzeugung der heißen neutralen Gase, die in der Gegenstrom-Einspritzleitung (6) für heiße neutrale Gase zirkulieren, konfiguriert ist,
   - einen Abscheider (12) stromabwärts des Reaktors (1), der dazu konfiguriert ist, die Trennung des Pyrolysekokses (C) und des Stroms kondensierbarer und nicht kondensierbarer Gase (FR') zu ermöglichen,
   - einen Kondensator (14) stromabwärts des Abscheiders (12), der dazu konfiguriert ist, die Trennung des Pyrolyseöls (H) und des Stroms nicht kondensierbarer Gase (FR") zu ermöglichen.

7. Verfahren nach Anspruch 6, **dadurch gekennzeichnet, dass** die Anlage Mittel zum Einspritzen ($Ci_1$) eines ersten Teils ($FR''_1$) des Stroms nicht kondensierbarer Gase (FR") aus dem Kondensator (14) zum Brenner (11) nach der Erwärmung durch Verbrennung dieses ersten Teils ($FR''_1$) des Stroms nicht kondensierbarer Gase (FR") umfasst.

8. Verfahren nach Anspruch 6 oder 7, **dadurch gekennzeichnet, dass** die Anlage Mittel zum Einspritzen ($Ci_2$) eines zweiten Teils ($FR''_2$) des Stroms nicht kondensierbarer Gase (FR") aus dem Kondensator (14) zu einem Wärmetauscher (E) des Brenners (11) umfasst, um die heißen neutralen Gase zu bilden, die in der Gegenstrom-Einspritzleitung (6) für heiße neutrale Gase zirkulieren, wobei die Wärme von dem Brenner (11) erzeugt wird, der vom ersten Teil ($FR''_1$) des Stroms nicht kondensierbarer Gase (FR") gespeist wird.

9. Verfahren nach einem der Ansprüche 6 bis 8, **dadurch gekennzeichnet, dass** es den Schritt umfasst, der darin besteht, die aus dem Kondensator (14) stammenden nicht kondensierbaren Gase zu verwenden, um die heißen neutralen Gase, die in der Gegenstrom-Einspritzleitung (6) für heiße neutrale Gase zirkulieren, zu erwärmen und/oder die heißen neutralen Gase, die in der Gegenstrom-Einspritzleitung (6) für heiße neutrale Gase zirkulieren, zu bilden.

10. Verfahren nach einem der vorhergehenden Ansprüche, umfassend den Schritt der Verwendung von Pyrolysekoks (C) als Brennstoff zur Zuführung von Wärme, insbesondere zur Erwärmung des Eintragsgases (N).

11. Verfahren nach einem der vorhergehenden Ansprüche, umfassend den Schritt des Hinzufügens eines Wärmetauschers zwischen dem Abscheider (12) und dem Kondensator (14), um eine Wärmerückgewinnung zu ermöglichen.

12. Verfahren nach einem der vorhergehenden Ansprüche, umfassend den Schritt der Verwendung von Pyrolysekoks (Cl) gemischt mit Pyrolyseöl (H) zur Herstellung eines Brennstoffs.

**Claims**

1. Process for fast pyrolysis of biomass organic particles (2), **characterized in that** it makes use of a fast pyrolysis reactor (1) with entrained flow of biomass organic particles (2), comprising:

   - a tubular reaction chamber (3) in which the pyrolysis reaction of particles (2) takes place, including an upper part (3a) and a lower part (3b) opposite the upper part (3a),
   - device (4) for injection of particles (2) in the upper part (3a) of the reaction chamber (3), to form a flow (FG) of particles (2) dropping by gravity in the reaction chamber (4),
   - an evacuation duct (5) for products originating from the pyrolysis reaction and present in the reaction chamber (3), including gases and pyrolyzed particles (2) designed particularly to form pyrolytic oil, pyrolytic coke also called "char", and incondensable gases,
   - a counter current hot neutral gases injection duct 6 in the lower part (3b) of the reaction chamber (3) making it possible to form a counter current flow FC of hot neutral gases coming into contact with the flow (FG) of particles 2 dropping by gravity, so as to generate the fast pyrolysis reaction of the particles 2, said process comprising the step for counter current injection of hot neutral gases into the reaction chamber (3) of the reactor (1) in the direction opposite to the direction of particles (2) dropping by gravity, on which the fast pyrolysis reaction will take place, the temperature of the hot neutral gases being between 500 and 600°C, and the diameter of the particles (2) being between 200 $\mu$m and 1 mm,

   the injection device (4) of particles (2) including a reservoir (4a) of particles (2), containing particles (2) and located outside the reaction chamber (3), a tubular injector (4c) of particles (2) located in the upper part (3) of the reaction chamber (3), and means (4b) of transporting particles (2) originating from the reservoir (4b) to the tubular injector (4c), the reactor comprising means (N) of injecting an entrainment gas in the upper part (3a) of the reaction chamber (3), in the tubular injector (4c) of the injection device, said process comprising the step to inject an entrainment gas (N) into the reaction chamber (3) of the reactor (1), to improve injection of particles (2) into the reaction chamber (3).

2. Process according to claim 1, **characterized in that** the evacuation duct (5) opens up in the upper part (3a) of the reaction chamber (3) to evacuate products derived from the pyrolysis reaction in the reaction chamber (3), since these products migrate to the upper part (3a) of the reaction chamber (3).

3. Process according to claim 1 or 2, **characterized in that** the diameter of the particles (2) is between 200 $\mu$m and 800 $\mu$m.

4. Process according to any preceding claim, **characterized in that** the diameter (Di) of the tubular injector (4c) is less than the diameter (Dr) of the reaction chamber (3).

5. Process according to any preceding claim, **characterized in that** the means (4b) of transport of the particles (2) comprise a worm screw system or a vibrating belt system.

6. Process according to any preceding claim, **characterised in that** it makes rise of an installation (10) for fast pyrolysis of biomass organic particles (2),comprising:

   - said fast pyrolysis reactor (1),

- a burner 11) upstream from the reactor (1), configured to produce hot neutral gases circulating in the hot neutral gases counter current injection duct (6),
- a separator (12) downstream from the reactor (1), configured to enable separation of pyrolytic coke (C) and the flow of condensable and incondensable gases (FR'),
- a condenser (14) downstream from the separator (12), configured to enable separation of pyrolytic oil (H) and the flow of incondensable gases (FR"),

7. Process according to claim 6, **characterized in that** said installation comprises means ($Ci_1$) of injection of a first part ($FR"_1$) of the incondensable gases flow (FR") output from the condenser (14) into the boiler (11) after heating by combustion of this first part ($FR"_1$) of the incondensable gases flow (FR").

8. Process according to claim 6 or 7, **characterized in that** said installation comprises means ($Ci_2$) of injecting a second part ($FR"_2$) of the incondensable gases flow (FR") output from the condenser (14) to a heat exchanger (E) of the burner (11) to form the hot neutral gases circulating in the hot neutral gases counter current injection duct (6), heat being produced from the burner (11) supplied by the first part ($FR"_1$) of the incondensable gases flow (FR").

9. Process according to any of claim 6 to 8, **characterized in that** it includes the step consisting of using incondensable gases output from the condenser (14) to heat hot neutral gases circulating in the hot neutral gases counter current injection duct (6) and/or to form the hot neutral gases circulating in the hot neutral gases counter current injection duct (6).

10. Process according to any preceding claim, comprising the step to use pyrolytic coke (C) as fuel to add heat, particularly for heating the entrainment gas (N).

11. Process according to any preceding claim, comprising the step to add a heat exchanger between the separator (12) and the condenser (14) to enable heat recovery.

12. Process according to any preceding claim, comprising the step to use pyrolytic coke (C) mixed with pyrolytic oil (H) to produce a fuel.

# FIG. 1

FIG. 2

FIG. 4

FIG. 3A    FIG. 3B    FIG. 3C

FIG. 5A    FIG. 5B    FIG. 5C

FIG. 6

FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2614069 A
- US 2008197012 A1
- US 4891459 A

**Littérature non-brevet citée dans la description**

- **A.V BRIDGEWATER.** Review of fast pyrolysis of biomass and product upgrading. *Biomass and bioenergy,* 2012, vol. 38, 68-94
- **E. BUTLER et al.** A review of recent laboratory research and commercial developments in fast pyrolysis and upgrading. *Renewable and sustainable Energy Reviews,* 2011, vol. 15, 4171-4186
- **KOVAC ; O'NEIL.** The Georgia Tech entrained flow pyrolysis process - Pyrolysis and gasification. Elsevier applied science, 1989, 159-179
- **MANIATIS, K et al.** The Egemin flash pyrolysis process : commissioning and initial results. *Advance in thermochemical biomass conversion,* 1994, 1257-1264